(19) Europäisches Patentamt
European Patent Office
Office européen des brevets

(11) **EP 2 034 685 B1**

(12) **FASCICULE DE BREVET EUROPEEN**

(45) Date de publication et mention
de la délivrance du brevet:
**10.10.2012 Bulletin 2012/41**

(51) Int Cl.:
*H04L 5/00* *(2006.01)*          *H04L 27/26* *(2006.01)*
*H04L 1/00* *(2006.01)*

(21) Numéro de dépôt: **08163789.4**

(22) Date de dépôt: **05.09.2008**

(54) **Méthode d'estimation aveugle de paramètres de modulation OFDM**

Blindschätzmethode der OFDM-Modulationsparameter

Method for blindly estimating OFDM modulation parameters

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **06.09.2007 FR 0757385**

(43) Date de publication de la demande:
**11.03.2009 Bulletin 2009/11**

(73) Titulaire: **Commissariat à l'Énergie Atomique et aux Énergies Alternatives
75015 Paris (FR)**

(72) Inventeurs:
• **Bouzegzi, Abdelaziz
38320 Poisat (FR)**
• **Ciblat, Philippe
75020 Paris (FR)**
• **Jallon, Pierre
38100 Grenoble (FR)**

(74) Mandataire: **Augarde, Eric et al
BREVALEX
56 Boulevard de l'Embouchure,
Bât. B
B.P. 27519
31075 Toulouse Cedex 2 (FR)**

(56) Documents cités:
**CA-A1- 2 298 316**

• **AKMOUCHE ET AL.: "OFDM parameters estimation a time approach" ASILOMAR CONFERENCE ON SIGNALS, SYSTEMS AND COMPUTERS, 29 octobre 2000 (2000-10-29), pages 142-146, XP010535349 Piscataway, US**
• **YINGWEI YAO, GIANNAKIS: "Blind carrier frequency offset estimation for OFDMA-based wireless networks" IEEE MILITARY COMMUNICATIONS CONFERENCE, 31 octobre 2004 (2004-10-31), pages 1233-1239, XP010825957 Piscataway, US**
• **YINGWEI YAO, GIANNAKIS: "Blind CFO estimation in OFDM systems" IEEE WORKSHOP ON SIGNAL PROCESSING ADVANCES IN WIRELESS COMMUNICATIONS, 11 juillet 2004 (2004-07-11), pages 353-357, XP010806102 Piscataway, US**

**Description**

**DOMAINE TECHNIQUE**

La présente invention concerne une méthode d'estimation aveugle de paramètres de modulation OFDM (*Orthogonal Frequency Division* Multiplex) et plus particulièrement une méthode d'estimation aveugle basée sur un critère de minimum d'entropie.

**ÉTAT DE LA TECHNIQUE ANTÉRIEURE**

La modulation OFDM est bien connue de l'état de la technique et est employée dans de nombreux systèmes de télécommunication tels que DVB-T, ADSL, Wi-Fi (IEEE 802 a/g), WiMax (IEEE 802.16). Elle présente l'avantage d'une bonne efficacité spectrale et d'une bonne protection contre les évanouissements sélectifs en fréquence.

On rappelle que dans un système OFDM, les symboles d'information à transmettre sont groupés par blocs de $N$ symboles, où $N$ est généralement une puissance de 2, les symboles OFDM étant obtenus en effectuant une IFFT (*Inverse Fast Fourier Transform*) sur lesdits blocs de symboles d'information. Généralement, un préfixe cyclique est rajouté au début de chaque symbole OFDM pour absorber l'interférence inter-symbole ou ISI et faciliter l'égalisation à la réception. Le signal OFDM constitué par ces symboles OFDM peut être éventuellement ensuite translaté en fréquence.

De manière générale, le signal émis par un système OFDM peut être représenté en bande de base par :

$$s_a(t) = \frac{\sqrt{E}}{N} \sum_k g\left(t - k(N+D)T_c\right) . \sum_{n=0}^{N-1} a_{k,n} e^{-2i\pi \frac{n}{NT_c}\left(t - DT_c - k(N+D)T_c\right)} \qquad (1)$$

où $E$ est la puissance du signal, $N$ est le nombre de porteuses du multiplex OFDM, $a_{k,n}$ sont les symboles d'information relatifs au bloc $k$, appartenant à un alphabet de modulation $M$-aire, typiquement BPSK, QPSK ou QAM, $1/T_c$ est le débit des symboles d'information où $T_c$ est le temps « bribe » ou « chip », $D$ est la taille du préfixe cyclique exprimée en nombre de bribes , g(t) est une impulsion de mise en forme des symboles OFDM ayant un support temporel $[0,(N+D)T_c]$ destiné à apodiser le spectre du signal.

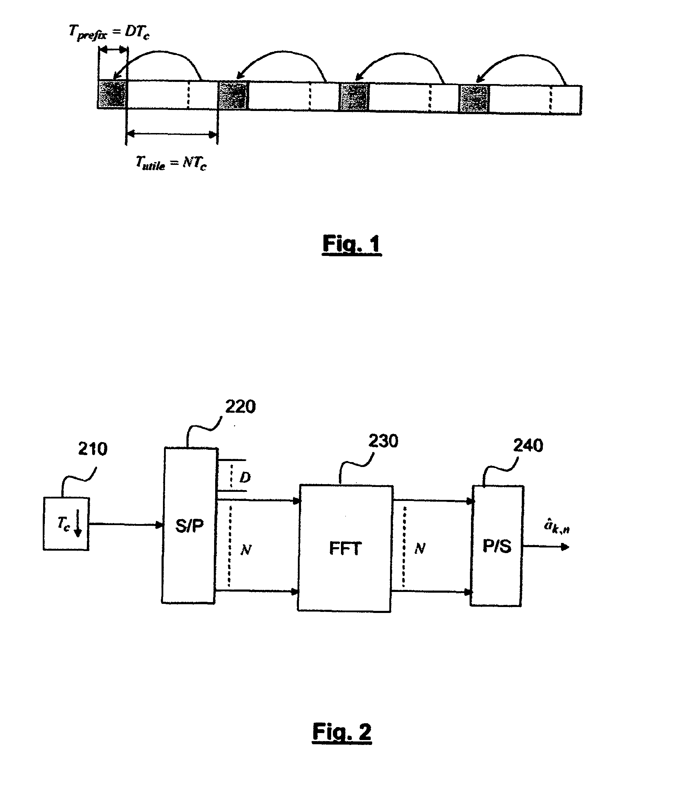

On a représenté de manière schématique un signal OFDM en Fig. 1. Il est constitué d'une séquence de symboles OFDM, chaque symbole présentant une durée totale $(N+D)T_c$ dont une durée utile $NT_c$ et un intervalle de garde de durée $T_{prefix}=DT_c$, dans lequel se trouve le préfixe cyclique. On rappelle que, de manière classique, le préfixe cyclique est une copie de la fin du symbole OFDM à l'intérieur de l'intervalle de garde. Dans certains systèmes OFDM, les préfixes cycliques sont simplement omis, autrement dit les parties utiles des symboles sont séparées par des intervalles de garde « vides ». Cette technique de transmission permet aussi d'éliminer l'interférence intersymbole mais ne rend pas aisée l'égalisation du signal.

Après propagation dans le canal de transmission, le signal OFDM reçu par le récepteur peut s'exprimer par :

$$r_a(t) = h \otimes s_a(t) + b(t) \qquad (2)$$

où $h \otimes s_a$ est la convolution entre le signal OFDM émis, $s_a(t)$ est la réponse impulsionnelle du canal de transmission $h(t)$, et $b(t)$ est une fonction aléatoire décrivant le bruit. On supposera que la longueur de la réponse impulsionnelle est inférieure à la durée de l'intervalle de garde, de sorte que l'on pourra faire abstraction de l'interférence intersymbole (ISI).

La Fig. 2 représente de manière schématique la structure d'un récepteur OFDM.

Après éventuelle démodulation en bande de base, le signal reçu est échantillonné en 210 à la fréquence chip, puis les échantillons sont soumis à une conversion série/parallèle en 220 pour former des blocs de $N + D$ échantillons. Les $D$ premiers échantillons correspondant à l'intervalle de garde sont rejetés et le bloc des $N$ échantillons restants correspondant à la partie utile du symbole OFDM est soumis à une FFT en 230. Les symboles démodulés obtenus sont ensuite soumis à une conversion série en 240.

En définitive, en supposant que le récepteur est bien synchronisé en temps et en fréquence, les symboles démodulés peuvent s'exprimer par :

$$\hat{a}_{k,n} = h_n a_{k,n} + b_{k,n} \qquad (3)$$

*où* $h_n$ est un coefficient complexe qui dépend de la réponse impulsionnelle du canal de transmission, et $b_{k,n}$ est une variable aléatoire représentant un échantillon de bruit.

Le bon fonctionnement de ce récepteur nécessite une synchronisation précise en temps et en fréquence. En effet, on comprend qu'une mauvaise synchronisation en temps entraînera un glissement temporel progressif de la fenêtre de troncation et une mauvaise synchronisation en fréquence, une rotation en phase des échantillons, pouvant être représentée par un facteur multiplicatif $e^{2i\pi\Delta f n T_c}$ où $\Delta f$ est l'offset de fréquence entre la fréquence de démodulation du récepteur et la fréquence porteuse du multiplex OFDM.

La synchronisation temporelle et fréquentielle du récepteur est généralement réalisée grâce à l'acquisition d'une séquence d'apprentissage.

Le fonctionnement de ce détecteur suppose bien entendu que l'on connaisse les paramètres temporels de modulation du signal OFDM. Par paramètres temporels on entend la durée utile $NT_c$, la durée de l'intervalle de garde $DT_c$ et/ou la période de répétition $(N+D)T_c$ de ces symboles.

Fréquemment, le récepteur ne connaît pas *a priori* les paramètres temporels de modulation OFDM et doit procéder à leur estimation à l'aveugle.

Plusieurs méthodes ont été proposées pour estimer à l'aveugle les paramètres temporels. Ces méthodes exploitent la présence du préfixe cyclique dans le signal OFDM et les propriétés de cyclostationnarité qui en découlent. Les estimateurs proposés sont basés sur la fonction d'autocorrélation du signal OFDM. On trouvera un exemple d'une telle méthode d'estimation dans l'article de P. Liu et al. intitulé « A blind time-parameters estimation scheme for OFDM in multi-path channel », publié dans Proc. 2005 Int'1 Conference on Information, Communications and Signal Processing, vol. 1, pp. 242-247, 23-26 Sept. 2005.

Un autre exemple d'une telle méthode se peut trouver dans l'article de W. Akmouche et al. intitulé « OFDM parameters estimation a time approach », publié dans Proc. Asilomar Conference on Signals, Systems and Computers, pages 142-146, 29 octobre 2000.

Ces méthodes d'estimation présentent cependant l'inconvénient de nécessiter d'acquérir un nombre élevé de symboles OFDM pour effectuer le calcul de la fonction d'autocorrélation. En outre, ces méthodes ne fonctionnent pas dans le cas, évoqué plus haut, où le signal OFDM est dépourvu de préfixes cycliques.

Une autre méthode a été proposée pour l'estimation aveugle du décalage de fréquence porteuse, basée sur une minimisation du Kurtosis du signal demodulé.

Cependant, pour effectuer cette estimation, il est nécessaire de connaître les paramètres temporels du signal OFDM. On trouvera un exemple de cette méthode dans l'article de Y. Yao et B. Griannakis intitulé : « Blind carrier frequency offset estimation for OFDMA-based wireless networks », publié dans Proc. IEEE Military communications conference, pages 1233-1239, 31 octobre 2004.

Le but de la présente invention est de proposer une méthode d'estimation à l'aveugle de paramètres de modulation d'un signal OFDM qui ne présente pas les inconvénients précités.

Un but subsidiaire de la présente invention est de permettre une synchronisation temporelle et fréquentielle du récepteur OFDM qui soit rapide et ne nécessite pas de séquence d'apprentissage.

## EXPOSÉ DE L'INVENTION

La présente invention est définie par une méthode d'estimation aveugle d'au moins un paramètre temporel de modulation d'un signal OFDM, dans laquelle on procède à une pluralité de tentatives de démodulation dudit signal OFDM en utilisant une pluralité de valeurs respectives de ce paramètre temporel et, pour chaque tentative de démodulation, l'on calcule une fonction de coût représentative de l'entropie du signal démodulé, l'estimée dudit paramètre temporel étant alors obtenue comme la valeur de ce paramètre minimisant ladite fonction de coût.

De préférence, le signal OFDM est démodulé en bande de base à l'aide d'une fréquence de démodulation, puis échantillonné à une fréquence supérieure à la fréquence de Nyquist pour obtenir une séquence d'échantillons.

Avantageusement, pour chaque tentative de démodulation, lesdits échantillons sont ensuite corrigés par un facteur de déphasage correspondant à une valeur d'offset de fréquence entre la fréquence porteuse du multiplex OFDM et la fréquence de démodulation.

Pour chaque tentative de démodulation, on peut amputer la séquence formée par les échantillons ainsi corrigés, d'un nombre donné de ses premiers échantillons, correspondant à un offset temporel.

Pour chaque tentative de démodulation, on peut découper la séquence ainsi amputée en blocs de taille donnée. On ampute alors chacun des blocs ainsi obtenus d'un nombre donné de ses premiers échantillons, correspondant à une durée de préfixe de symbole OFDM, et l'on effectue une FFT de chacun des blocs ainsi amputés.

Pour chaque bloc $k=0,...,K$-1 où $K$ est le nombre total de blocs de la séquence amputée, on peut calculer la FFT par :

$$\hat{a}_{k,n} = \sum_{p=0}^{\beta-1} \rho_p^k e^{2i\pi \frac{np}{\beta}}$$

où $\beta$ est la taille des blocs amputés, correspondant à une durée utile de symbole OFDM, $T_e$ est la période d'échantillonnage, $\rho_p^k$ est le $(p+1)^{i\grave{e}me}$ échantillon corrigé en fréquence du $k^{i\grave{e}me}$ bloc et les $\hat{a}_{k,n}$, $k=0,...,K$-1, $n=0,...,\hat{N}$-1, où $\hat{N}$ est ladite durée utile exprimée en périodes chip, forment une séquence de symboles démodulés selon ladite tentative de démodulation.

On peut calculer ensuite la valeur de ladite fonction de coût à partir de ladite séquence des symboles démodulés.

Avantageusement, ladite fonction de coût est le kurtosis. Dans ce cas, la valeur de ladite fonction de coût peut être calculée par :

$$\hat{\kappa}\left(\{\hat{a}_{k,n}\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

Avantageusement, la méthode d'estimation procède de manière itérative, chaque itération correspondant à une tentative de démodulation à l'aide d'une dite valeur d'offset en fréquence, une dite valeur d'offset temporel, une dite durée de préfixe et une dite durée utile.

On parcourt de préférence, au fur et à mesure des itérations, un ensemble discret de valeurs d'offset en fréquence, d'offset temporel, de durée de préfixe et de durée utile, selon un algorithme de balayage, et l'on retient comme estimation du(des) paramètre(s) temporel(s) la durée de préfixe et/ou la durée utile réalisant le minimum de la fonction de coût sur ledit ensemble.

Ledit algorithme de balayage peut être de type à descente de gradient.

Selon une variante de réalisation, on procède à une pluralité de premières tentatives de démodulation pour estimer un premier paramètre temporel, puis à une pluralité de secondes tentatives de démodulation pour estimer un second paramètre temporel, lesdites secondes tentatives de démodulation utilisant l'estimé du premier paramètre temporel pour démoduler le signal OFDM.

Avantageusement, pour chaque première tentative de démodulation, les échantillons sont corrigés par un facteur de déphasage correspondant à une valeur d'offset de fréquence entre la fréquence porteuse du multiplex OFDM et la fréquence de démodulation.

Pour chaque première tentative de démodulation, on peut tronquer la séquence ainsi amputée après un nombre donné d'échantillons, ledit nombre correspondant à une durée utile donnée de symbole OFDM. On effectue ensuite une FFT sur les échantillons de la séquence ainsi tronquée.

La FFT peut être calculée par :

$$\hat{a}_n = \sum_{p=0}^{\beta-1} \rho_p e^{2i\pi \frac{np}{\beta}}$$

où $\beta$ est la longueur de la séquence tronquée, $T_e$ est la période d'échantillonnage, $\rho_p$ est le $(p+1)^{i\grave{e}me}$ échantillon corrigé en fréquence de la séquence tronquée, les $\hat{a}_n$, $n=0,...,\hat{N}$-1, où $\hat{N}$ est ladite durée utile exprimée en périodes chip, formant une séquence de symboles démodulés selon ladite première tentative de démodulation.

On peut calculer une première valeur ($\Phi(\Delta\varphi,\delta,\beta)$) de ladite fonction de coût à partir de ladite séquence des symboles démodulés.

Avantageusement, ladite fonction de coût est le kurtosis.

Dans ce cas, la valeur de ladite fonction de coût peut être calculée par :

$$\hat{\kappa}\left(\{\hat{a}_n\}\right) = \frac{\sum_{n=0}^{\hat{N}-1}|\hat{a}_n|^4}{\left(\sum_{n=0}^{\hat{N}-1}|\hat{a}_n|^2\right)^2} - 2 - \frac{\left|\sum_{n=0}^{\hat{N}-1}(\hat{a}_n)^2\right|^2}{\left(\sum_{n=0}^{\hat{N}-1}|\hat{a}_n|^2\right)^2}$$

La méthode d'estimation opère avantageusement de manière itérative, chaque itération correspondant à une première tentative de démodulation à l'aide d'une dite valeur d'offset en fréquence, une dite valeur d'offset temporel, une dite durée de préfixe et une dite durée utile.

On parcourt de préférence, au fur et à mesure des itérations, un ensemble discret de valeurs d'offset en fréquence, d'offset temporel, de durée de préfixe et de durée utile, selon un algorithme de balayage, et l'on mémorise les valeurs d'offset de fréquence, d'offset temporel et de durée utile réalisant le minimum de la fonction de coût sur ledit ensemble, l'estimation du premier paramètre temporel étant la durée utile ainsi mémorisée.

Chaque échantillon de ladite séquence d'échantillons peut être corrigé par un facteur de déphasage correspondant à la valeur d'offset de fréquence ainsi mémorisée.

Avantageusement, pour chaque seconde tentative de démodulation, on ampute la séquence formée par les échantillons ainsi corrigés, d'un nombre donné de ses premiers échantillons, correspondant à un offset temporel, on découpe ensuite la séquence amputée en blocs de taille donnée et l'on supprime de chacun desdits blocs un nombre donné de ses premiers échantillons, correspondant à une durée de préfixe de symbole OFDM.

Pour chaque bloc $k=0,...,K$-1 où $K$ est le nombre total de blocs obtenus, on peut calculer une FFT par :

$$\hat{a}_{k,n} = \sum_{p=0}^{\beta_0-1} \rho_p^k e^{2i\pi\frac{np}{\beta_0}}$$

où $\beta_0$ est la valeur de durée utile mémorisée, exprimée en nombre d'échantillons, $T_e$ est la période d'échantillonnage, $\rho_p^k$ est le $(p+1)^{ième}$ échantillon corrigé en fréquence du $k^{ième}$ bloc et les $\hat{a}_{k,n}$, $k=0,...,K$-1, $n=0,...,\hat{N}$-1, forment une séquence de symboles démodulés selon ladite seconde tentative de démodulation.

On calcule ensuite une seconde valeur $(\Phi(\delta,\gamma))$ de ladite fonction de coût à partir de ladite séquence des symboles démodulés.

Avantageusement, ladite fonction de coût est le kurtosis.

Dans ce cas, la valeur de ladite fonction de coût est calculée par :

$$\Phi(\delta,\gamma) = \hat{\kappa}\left(\{\hat{a}_{k,n}\}\right) = \frac{\sum_{k=0}^{K-1}\sum_{n=0}^{\hat{N}-1}|\hat{a}_{k,n}|^4}{\left(\sum_{k=0}^{K-1}\sum_{n=0}^{\hat{N}-1}|\hat{a}_{k,n}|^2\right)^2} - 2 - \frac{\left|\sum_{k=0}^{K-1}\sum_{n=0}^{\hat{N}-1}(\hat{a}_{k,n})^2\right|^2}{\left(\sum_{k=0}^{K-1}\sum_{n=0}^{\hat{N}-1}|\hat{a}_{k,n}|^2\right)^2}$$

La méthode d'estimation procède avantageusement de manière itérative, chaque itération correspondant à une seconde tentative de démodulation à l'aide des valeurs d'offset en fréquence et de durée utile mémorisées, d'une dite valeur d'offset temporel et une dite durée de préfixe.

On parcourt de préférence, au fur et à mesure des itérations, un ensemble discret d'offset temporel et de durée de préfixe, selon un algorithme de balayage, et on mémorise les valeurs d'offset temporel et de durée de préfixe réalisant le minimum de la fonction de coût sur ledit ensemble, l'estimation du second paramètre temporel étant la durée de préfixe ainsi mémorisée.

Avantageusement, l'algorithme de balayage est de type à descente de gradient.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 illustre de manière schématique un signal OFDM ;
La Fig. 2 illustre de manière schématique un récepteur OFDM connu de l'état de la technique ;
Les Figs. 3A et 3B représentent les contributions respectives des différents trajets au signal OFDM reçu par un récepteur ;
La Fig. 4 donne un organigramme de la méthode d'estimation de paramètres de modulation OFDM selon un premier mode de réalisation de l'invention ;
Les Figs. 5A et 5B donnent un organigramme de la méthode d'estimation de paramètres de modulation OFDM selon un second mode de réalisation de l'invention.

## EXPOSÉ DÉTAILLÉ DE MODES DE RÉALISATION PARTICULIERS

Nous considérerons dans la suite le cas d'un système de télécommunication utilisant une modulation OFDM. Nous supposerons que le signal OFDM émis a la forme donnée par l'expression (1) et que les symboles d'information peuvent être représentés par des variables aléatoires indépendantes, identiquement distribuées et prenant leurs valeurs dans un alphabet de modulation $M$-aire. Les symboles OFDM peuvent contenir ou non un préfixe. Dans un souci de simplification, nous considérerons qu'ils contiennent un préfixe mais que celui-ci peut être vide.

Nous supposerons que le canal de transmission est de type multi-trajet. Le signal reçu par le récepteur peut alors s'exprimer, en bande base, par :

$$r_a(t) = \sum_{\ell=1}^{L} \lambda_j s_a(t - \tau_\ell) + b(t) \qquad (4)$$

où les $\lambda_\ell$ et $\tau_\ell$ sont respectivement les coefficients complexes d'atténuation et les retards associés aux différents trajets, $L$ est le nombre total de trajets et $b(t)$ un bruit blanc additif gaussien.

Nous nous plaçons dans un contexte aveugle, autrement dit le récepteur ne connaît pas les paramètres de modulation du signal OFDM.

Le signal reçu est échantillonné à une fréquence $f_e = \dfrac{1}{T_e}$ *supérieure* à la fréquence de Nyquist. Ainsi, l'on est certain que la période d'échantillonnage $T_e$ est inférieure à la période chip $T_c$.

Si l'on suppose tout d'abord que le récepteur est parfaitement synchronisé temporellement et fréquentiellement, les échantillons de signal reçu peuvent s'exprimer de la manière suivante :

$$\forall p \in \left[ 0, \hat{P} - 1 \right[$$

$$r_{k,p} = r_a\left( pT_e + \widehat{DT_c} + k(\widehat{NT_c} + \widehat{DT_c}) \right)$$

$$= \sum_{\ell=1}^{L} \lambda_\ell s_a\left( pT_e + \widehat{DT_c} + k(\widehat{NT_c} + \widehat{DT_c}) - \tau_\ell \right) \qquad (5)$$

dans laquelle on a négligé dans un premier temps le terme de bruit, où $k,p$ sont respectivement le numéro de symbole et le rang de l'échantillon à l'intérieur d'un symbole, $\widehat{DT_c}$ est une estimation de la durée du préfixe et où $\hat{P}$ est l'entier tel que $\left| \hat{P}T_e - \widehat{NT_c} \right|$ soit minimal.

Les échantillons de signal reçu sont soumis à une transformée de Fourier discrète, pour obtenir les symboles démodulés estimés :

$$\hat{a}_{k,v} = \sum_{p=0}^{\hat{P}-1} r_{k,p} e^{2i\pi p \frac{vT_e}{\widehat{NT_c}}} \qquad (6)$$

Considérons dans un premier temps les symboles décodés du premier symbole OFDM , soit $\{\hat{a}_{0,v}\}_v$. En utilisant l'expression (5) :

$$\hat{a}_{0,v} = \sum_{\ell=1}^{L} \sum_{k\in\Omega_\ell} \frac{1}{N} \sum_{n=0}^{N-1} \tilde{a}_{k,n}^{(\ell)} \sum_{p=0}^{\hat{P}-1} e^{-2i\pi pT_e\left(\frac{n}{NT_c} - \frac{v}{\widehat{NT_c}}\right)} \lambda_\ell g(pT_e + \widehat{DT_c} - \tau_\ell - k(N+D)T_c)$$

$$(7)$$

où $\widehat{NT_c}$ est une estimation de la durée utile des symboles OFDM ;

$$\tilde{a}_{k,n}^{(\ell)} = a_{k,n} e^{-2i\pi n\left(\widehat{DT_c} - DT_c - \tau_\ell - k(N+D)T_c\right)/NT_c} \quad \text{où } a_{k,n} \text{ est le } n^{\text{ième}} \text{ échantillon du bloc } k \text{ transmis ;}$$

$\Omega_\ell$ est l'ensemble des valeurs $k \in \mathbb{Z}$ telles que $\exists p \in [0, \hat{P}\text{-}1]$ tel que $g(pT_e + \widehat{DT_c} - \tau_\ell - k(N+D)T_c) \neq 0$.

Sans perte de généralité, on supposera dans la suite que $g = 1_{(N+D)T_c}$, fonction fenêtre égale à 1 entre 0 et $(N+D)T_c$ et nulle partout ailleurs.

Considérons la contribution d'un trajet sur le symbole décodé. On introduit pour cela $\hat{a}_{0,v}^{(\ell)}$ tel que :

$$\hat{a}_{0,v}^{(\ell)} = \sum_{k\in\Omega_\ell} \frac{1}{N} \sum_{n=0}^{N-1} \tilde{a}_{k,n}^{(\ell)} \sum_{p=0}^{\hat{P}-1} e^{-2i\pi pT_e\left(\frac{n}{NT_c} - \frac{v}{\widehat{NT_c}}\right)} \lambda_\ell g(pT_e + \widehat{DT_c} - \tau_\ell - k(N+D)T_c)$$

et donc :

$$\hat{a}_{0,v} = \sum_{\ell=1}^{L} \hat{a}_{0,v}^{(\ell)}$$

$$(8)$$

Si *Card*$(\Omega_\ell) = 1$, on peut montrer en faisant l'hypothèse que N est grand devant 1 (ce qui est le cas pour la très grande majorité des systèmes OFDM) que :

$$\hat{a}_{0,v}^{(\ell)} = \frac{\lambda_\ell}{N} \sum_{n=0}^{N-1} \tilde{a}_{k(\ell),n}^{(\ell)} e^{j\theta} \frac{sin\left(\pi \frac{\widehat{NT_c}}{NT_c}\left(n - v \frac{NT_c}{\widehat{NT_c}}\right)\right)}{sin\left(\pi T_c\left(n - v \frac{NT_c}{\widehat{NT_c}}\right)\right)} \qquad (9)$$

et que $\hat{a}_{0,v}^{(\ell)} = \frac{\lambda_\ell}{NT_e} \tilde{a}_{k(\ell),v}^{(\ell)} e^{j\theta}$ si et seulement si $\widehat{NT_c} = NT_c$ .

Au contraire, si $Card(\Omega_\ell)>1$, le symbole décodé $\hat{a}_{0,v}^{(\ell)}$ dépend toujours d'au moins deux symboles OFDM indépendants.

En appliquant ce résultat au symbole estimé $\hat{a}_{0,v} = \sum_{\ell=1}^{L} \hat{a}_{0,v}^{(\ell)}$ , on peut déduire en exprimant $\tilde{a}_{k(\ell),v}^{(\ell)}$ en fonction de $a_{k(\ell),v}$ que :

$$\hat{a}_{0,v} = a_{k,n} \sum_{\ell=1}^{L} \frac{\lambda_\ell}{NT_e} e^{-2j\pi n\left(\widehat{DT_c} - DT_c - \tau_\ell - k(N+D)T_c\right)/NT_c} e^{j\theta} \qquad (10)$$

si et seulement si, $\forall \ell, k(\ell)=k$.

On peut déduire de ce premier résultat que si les échantillons $r_{0,p}$ sont des échantillons d'un même symbole OFDM, (le même pour tous les trajets), alors les symboles estimés $\hat{a}_{0,v}$ ne dépendent que d'un seul des symboles transmis, $\tilde{a}_{0,v}$, si et seulement si $\widehat{NT_c} = NT_c$ . Sinon, dans tous les autres cas, $\hat{a}_{0,v}$ dépend d'au moins deux des symboles transmis.

On remarquera que si la durée du préfixe cyclique est plus longue que la longueur de la réponse impulsionnelle du canal de transmission, il n'y a pas d'interférence inter-symbole. Plus précisément, la partie utile d'un symbole OFDM s'étant propagé le long d'un trajet n'est pas interférée par un autre symbole OFDM s'étant propagé le long d'un autre trajet.

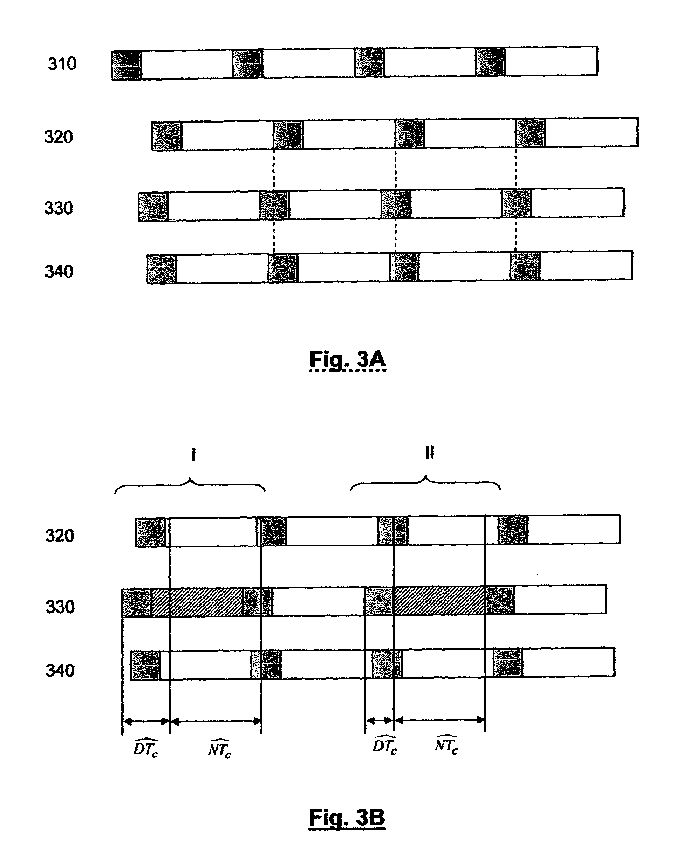

On a représenté en Fig. 3A le signal OFDM 310 tel qu'émis par l'émetteur et en 320, 330, 340, les contributions au signal reçu, correspondant à la propagation dudit signal OFDM selon trois trajets distincts. On remarque que la partie utile d'un symbole OFDM se propageant sur un trajet ne chevauche pas un autre symbole OFDM se propageant sur un autre trajet.

Ce résultat vaut également pour les autres symboles OFDM, c'est-à-dire pour $k>0$. On en déduit, qu'un symbole estimé $\hat{a}_{k,v}$, pour $k$ quelconque, ne dépend que d'un seul des symboles transmis si et seulement si $\widehat{DT_c} = DT_c$ . Dans le cas contraire, on peut montrer que les échantillons $r_{k,p}$ correspondent à des échantillons d'au moins 2 symboles OFDM.

Ce résultat est illustré en Fig. 3B les signaux OFDM s'étant propagés selon les trois trajets. On a représenté en I le cas d'une estimation $\widehat{NT_c}$ exacte mais avec une estimation $\widehat{DT_c}$ erronée. On comprendra que deux symboles OFDM consécutifs interviennent alors dans le calcul de $\hat{a}_{k,v}$ (la partie utile estimée de largeur $\widehat{NT_c}$ recouvre alors le préfixe du symbole suivant). Autrement dit, $Card(\Omega)=2$. De même, on a représenté en II le cas où les estimations $\widehat{NT_c}$ et $\widehat{DT_c}$ sont exactes. On voit qu'un symbole OFDM intervient alors dans le calcul de $\hat{a}_{\mu,v}$.

Une estimation erronée de paramètre temporel conduit à $Card(\Omega) \geq 2$ ce qui augmente l'entropie du signal démodulé par rapport au cas où l'on a une estimation exacte ($Card(\Omega)=1$).

L'idée à la base de l'invention est d'utiliser un critère de minimum d'entropie pour déterminer si les bornes d'échantillonnage sont alignées sur le début et la fin de la partie utile d'un signal OFDM.

Pour ce faire, on démodule le signal échantillonné en faisant varier les paramètres de modulation et l'on sélectionne le ou les paramètres conduisant à un minimum d'entropie du signal ainsi démodulé.

En effet, si les bornes d'échantillonnage sont bien alignées sur le début et la fin de la partie utile, l'entropie de la séquence démodulée sera minimale. En revanche, dès lors que ces bornes sont décalées par rapport aux limites de la partie utile, la portion de symbole OFDM précédant ou suivant le symbole courant entraînera une augmentation de l'entropie de la séquence démodulée.

Afin de minimiser l'entropie, on utilisera une fonction de coût, représentative de l'entropie du signal démodulé, par exemple le kurtosis de cette séquence.

On rappelle que le kurtosis d'une variable aléatoire est le rapport entre son cumulant d'ordre 4 et le carré de sa variance. Plus précisément, si $\alpha$ est une variable aléatoire complexe, le kurtosis de $\alpha$ peut s'écrire comme :

$$\kappa(\alpha) = \frac{cum_4(\alpha)}{\left(cum_2(\alpha)\right)^2} = \frac{E\left\{|\alpha|^4\right\}}{\left(E\left\{|\alpha|^2\right\}\right)^2} - 2 - \frac{\left|E\left\{\alpha^2\right\}\right|^2}{\left(E\left\{|\alpha|^2\right\}\right)^2} \qquad (11)$$

où l'on a noté $E\{x\}$ l'espérance mathématique de $x$. Si $\alpha_n$, $n=0,..,N$-1 est une réalisation d'une séquence de $N$ variables aléatoires indépendantes et identiquement distribuées (*i.i.d.*), le kurtosis de la séquence $\alpha$ est estimé par :

$$\hat{\kappa}(\alpha) = \frac{\sum_{n=0}^{N-1}|\alpha_n|^4}{\left(\sum_{n=0}^{N-1}|\alpha_n|^2\right)^2} - 2 - \frac{\left|\sum_{n=0}^{N-1}\alpha_n^2\right|^2}{\left(\sum_{n=0}^{N-1}|\alpha_n|^2\right)^2} \qquad (12)$$

On notera que le kurtosis d'une variable aléatoire est aussi une mesure de l'écart entre sa densité de probabilité et une distribution gaussienne. En particulier, le kurtosis d'une variable aléatoire gaussienne est nul.

En outre, on peut montrer que le kurtosis possède la propriété importante suivante, à savoir si :

$$x_k = \sum_{n=0}^{N-1} \lambda_{k,n} a_n \qquad (13)$$

où $a_n$, $n=0,..,N$-1 est une séquence de variables aléatoires *i.i.d.*, et les $\lambda_{k,n}$, $n=0,..,N$-1 sont $N$ coefficients complexes, on a :

$$\kappa(x_k) \geq \min_n \kappa(a_n) \qquad (14)$$

l'égalité n'étant atteinte que si $\exists n_0 \in \{0,...N$-1$\}$ tel que :

$$\lambda_{k,n_0} \neq 0 \quad \text{et} \quad \forall n \neq n_0 \ \lambda_{k,n} = 0 \qquad (15)$$

avec $n_0 = \text{argmin}\kappa(a_n)$.

Si l'on applique cette propriété aux symboles estimés $\hat{a}_{k,v}$, on en déduit que le kurtosis est minimal si et seulement si, $\forall(k,v), \hat{a}_{k,v}$ ne dépend que d'un seul symbole émis. Par conséquent, $\kappa(\hat{a}_{\mu,v})$ sera minimale et égale à $\kappa$ $(a_{k,n})$ si et seulement si $\widehat{NT_c} = NT_c$ et $\widehat{DT_c} = DT_c$.

Ceci peut se comprendre intuitivement dans la mesure où une estimation erronée de paramètres temporels conduit à des $\hat{a}_{\mu,v}$ faisant intervenir un plus grand nombre de variables aléatoires *i.i.d.* correspondant aux symboles d'information $a_{k,n}$. En application du théorème central limite, le kurtosis de $\hat{a}_{\mu,v}$ se rapproche alors de celui d'une variable aléatoire gaussienne, autrement tend vers zéro par valeurs croissantes.

La présence du bruit gaussien en (4) ne change en rien le résultat précédent. En effet, si $y(t)=s(t)+b(t)$ où $b(t)$ est un bruit additif gaussien :

$$\kappa(y) = \frac{cum_4(s) + cum_4(b)}{\left(E\left(|s|^2\right) + \sigma_b^2\right)^2} = \frac{cum_4(s)}{\left(E\left(|s|^2\right) + \sigma_b^2\right)^2} = \kappa(s) \frac{E\left(|s|^2\right)}{\left(E\left(|s|^2\right) + \sigma_b^2\right)^2}$$

$$(16)$$

où l'on a noté $cum_4(.)$ le cumulant d'ordre 4 et $\sigma_b^2$ la variance du bruit. Etant donné que $b$ est gaussien, on a $cum_4$ (b)=0. Il résulte de (16) que le kurtosis de $y$ est proportionnel au kurtosis de $s$. Par conséquent, la minimisation du kurtosis de $y$ conduit à minimisation du kurtosis de $s$ et donc à l'estimation correcte des paramètres temporels $DT_c$ et $NTc$.

Le résultat précédent suppose que le récepteur est synchronisé temporellement et fréquentiellement avec le signal OFDM. Si tel n'est pas le cas, le résultat précédent reste cependant valable, le défaut de synchronisation conduisant à une augmentation du kurtosis de la séquence échantillonnée.

La recherche de la synchronisation temporelle et/ou fréquentielle peut être effectuée conjointement ou préalablement à l'estimation des paramètres de modulation du signal OFDM.

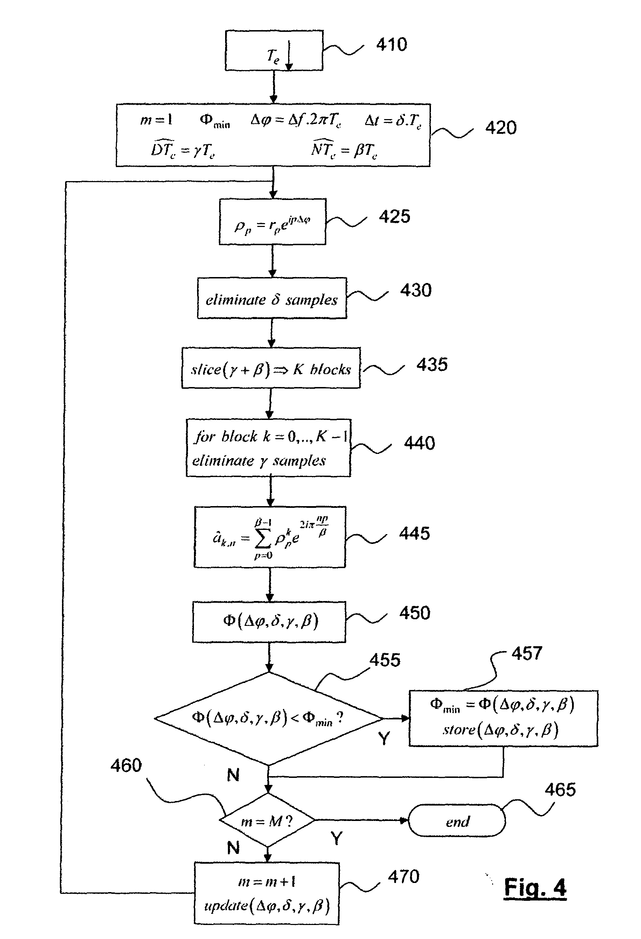

La Fig. 4 représente un organigramme d'une méthode d'estimation des paramètres de modulation du signal OFDM, selon un premier mode de réalisation de l'invention.

Dans ce mode de réalisation, la recherche de la synchronisation temporelle et/ou fréquentielle est réalisée dans la même boucle d'optimisation que l'estimation des paramètres de modulation OFDM.

A l'étape 410, après éventuelle démodulation en bande de base du signal reçu, on l'échantillonne à une fréquence supérieure à la fréquence de Nyquist, autrement dit avec une période d'échantillonnage $T_e$ inférieure à la période chip $T_c$ du signal OFDM émis.

A l'étape 420, on initialise le nombre d'itérations $m$ à 1 et une valeur $\Phi_{min}$ à un nombre élevé. On initialise ensuite la valeur de l'offset en fréquence $\Delta f$ (ou de manière équivalente une valeur de phase $\Delta\varphi = \Delta f.2\pi T_e$) correspondant à l'écart entre la fréquence de porteuse du multiplex OFDM et la fréquence de démodulation, l'offset temporel $\delta$, exprimé en nombre d'échantillons, soit $\Delta t = \delta.T_e$ où $\Delta t$ détermine le début de la fenêtre d'échantillonnage du signal OFDM. On initialise enfin les valeurs des paramètres temporels de modulation, exprimées en nombre d'échantillons, soit $\gamma$ et $\beta$, tels que $\widehat{DT_c} = \gamma T_e$ et $\widehat{NT_c} = \beta T_e$. Ces valeurs exprimées en nombre de périodes chip sont notées $\hat{N}$ et $\hat{D}$. On notera que $\hat{N}$ est également le nombre de porteuses supposé pour le multiplex OFDM. On pourra notamment initialiser $\hat{N}$ à un faible nombre de porteuses d'un système OFDM, par exemple $\hat{N}=64$.

On entre ensuite dans une boucle itérative visant à rechercher le minimum d'entropie de la séquence démodulée. Avantageusement, on utilisera une fonction représentative de l'entropie de la séquence démodulée, de préférence le kurtosis de cette séquence. Chaque itération de la boucle correspond à une tentative de démodulation du signal OFDM à l'aide d'un quadruplet de paramètres différent, comme explicité ci-après.

A l'étape 425, on corrige les échantillons reçus des déphasages correspondants audit offset en fréquence $\Delta f$, soit $\rho_p = r_p e^{ip\Delta\varphi}$.

A l'étape 430, on élimine les $\delta$ premiers échantillons de la séquence ainsi obtenue. On cale ainsi la fenêtre d'échantillonnage.

A l'étape 435, on découpe la séquence échantillonnée en blocs de taille $\gamma+\beta$. Soit $K$ le nombre de blocs entiers ainsi obtenus. On note $\rho_p^k$, $p=0,...,\beta-1$ les échantillons du $k^{\text{ième}}$ bloc.

A l'étape 440, on élimine de chacun de ces $K$ blocs obtenus les $\gamma$ premiers échantillons, autrement dit ceux correspondant au préfixe supposé.

On effectue ensuite, à l'étape 445, une FFT de taille $\beta$ des $K$ blocs ainsi obtenus, soit :

$$\hat{a}_{k,n} = \sum_{p=0}^{\beta-1} \rho_p^k e^{2i\pi\frac{np}{\beta}} \qquad \forall k \in \left[0, K-1\right] \quad ; \quad \forall n \in \left[0, \hat{N}-1\right] \qquad (17)$$

En 450, on calcule la valeur de la fonction de coût, notée $\Phi$, à partir des symboles démodulés. Cette valeur dépend bien entendu du choix des valeurs d'offsets temporel et fréquentiel, ainsi que des paramètres de modulation, soit $\Phi(\Delta\varphi,\delta,\gamma,\beta)$. Si la fonction de coût utilisée est le kurtosis $\kappa$ :

$$\Phi(\Delta\varphi,\delta,\gamma,\beta) = \hat{\kappa}\left(\{\hat{a}_{k,n}\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2} \qquad (18)$$

En 455, on compare la valeur $\Phi(\Delta\varphi,\delta,\gamma,\beta)$ à $\Phi_{min}$.

Si $\Phi(\Delta\varphi,\delta,\gamma,\beta)<\Phi_{min}$ la valeur minimale $\Phi_{min}$ est mise à jour en 457 grâce à $\Phi_{min}=\Phi(\Delta\varphi,\delta,\gamma,\beta)$ et l'on stocke les valeurs courantes correspondantes $\Delta\varphi,\delta,\gamma,\beta$.

Dans tous les cas, on passe par l'étape 460. On compare $m$ avec un nombre maximal prédéterminé d'itérations $M$. Si ce nombre maximal est atteint, on termine l'algorithme en 465. Dans la négative, on passe à l'étape 470.

En 470, le compteur $m$ d'itérations est incrémenté, les valeurs de $\Delta\varphi,\delta,\gamma,\beta$ sont actualisées selon un schéma de balayage. Par exemple, chacune des variables $\Delta\varphi,\delta,\gamma,\beta$ sera autorisée à prendre une série de valeurs discrètes à l'intérieur d'un intervalle respectif prédéterminé $I_{\Delta\varphi},I_\delta,I_\gamma,I_\beta$, le balayage étant alors effectué au sein d'un espace à 4 dimensions au sein du volume $I_{\Delta\varphi}\times I_\delta\times I_\gamma\times I_\beta$. Le balayage peut être systématique et prédéfini. On pourra cependant utiliser avantageusement un algorithme du type descente de gradient (gradient descent) pour actualiser à chaque itération les valeurs de $\Delta\varphi,\delta,\gamma,\beta$. Après la mise à jour des variables on retourne à l'étape 425 pour une nouvelle tentative de démodulation.

Au terme du balayage, c'est-à-dire en 465, lorsque le nombre $M$ d'itérations est atteint, les paramètres $\Delta\varphi_0,\delta_0,\gamma_0,\beta_0$ réalisant la valeur $\Phi_{min}$ sont ensuite utilisés pour démoduler le signal OFDM, à savoir :

$$\widehat{\Delta f} = \frac{\Delta\varphi_0}{2\pi T_e} \; ; \quad \widehat{\Delta t} = \delta_0.T_e \; ; \quad \widehat{DT_c} = \gamma_0 T_e \; ; \quad \widehat{NT_c} = \beta_0 T_e \; ; \qquad (19)$$

On notera que cet algorithme permet d'obtenir une synchronisation au bout d'un faible nombre de symboles OFDM ainsi qu'une acquisition tout aussi rapide des paramètres temporels de modulation OFDM.

Une fois la démodulation obtenue à l'aide des paramètres (19), on peut procéder à l'égalisation des symboles démodulés, de manière connue de l'homme du métier pour estimer les symboles d'information.

Afin de diminuer encore le temps d'acquisition, on peut procéder en deux temps, en faisant une première estimation grossière des paramètres de synchronisation et d'un paramètre de modulation, puis en procédant à une estimation plus fine de l'offset temporel et de l'autre paramètre de modulation.

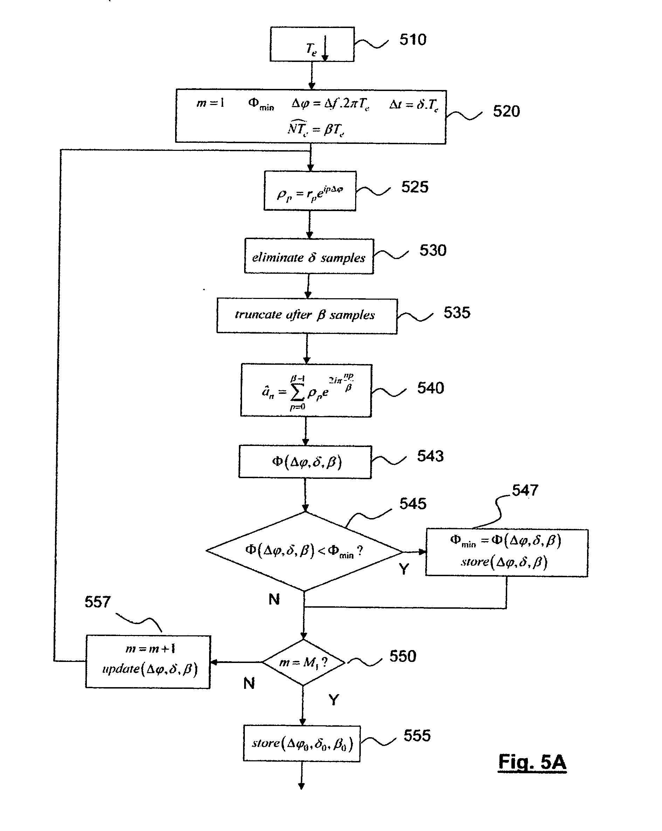

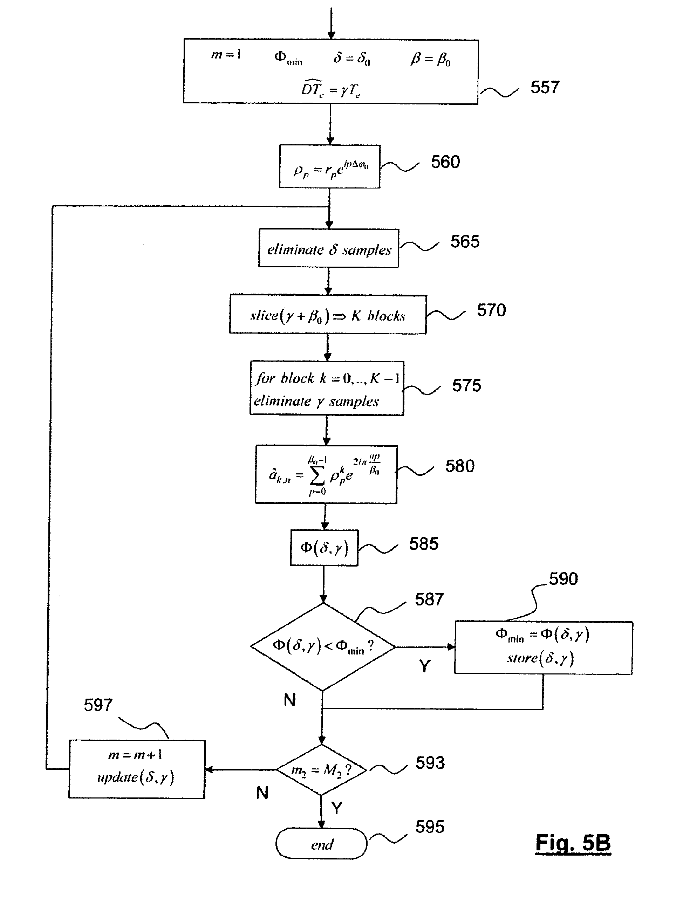

La Fig. 5A et la Fig. 5B représentent un organigramme d'une méthode d'estimation des paramètres temporels de modulation d'un signal OFDM, selon un second mode de réalisation de l'invention.

Dans ce mode de réalisation, on procède dans une première boucle à une recherche grossière de synchronisation sur un seul symbole OFDM.

L'étape 510 est identique à l'étape 410, le signal reçu est échantillonné à une fréquence supérieure à celle de Nyquist, après éventuelle démodulation en bande de base.

A l'étape 520, on initialise le nombre d'itérations $m_1$ à 1 et une valeur $\Phi_{min}$ à un nombre élevé. On initialise ensuite la valeur de l'offset en fréquence $\Delta f$ (ou de manière équivalente une valeur de phase $\Delta\varphi = \Delta f.2\pi T_e$), la valeur de l'offset temporel $\delta$, exprimée en nombre d'échantillons ainsi que la durée de préfixe, exprimée en nombre d'échantillons, $\beta$.

A l'étape 525, on corrige les échantillons reçus des déphasages correspondants à l'offset en fréquence $\Delta f$, soit $\rho_p = r_p e^{ip\Delta\varphi}$.

A l'étape 530, on élimine les $\delta$ premiers échantillons de la séquence ainsi obtenue.

A l'étape 535, on tronque la séquence obtenue après $\beta$ échantillons puis l'on effectue en 540 une FFT de taille $\beta$ sur ces échantillons, soit :

$$\hat{a}_n = \sum_{p=0}^{\beta-1} \rho_p e^{2i\pi \frac{np}{\beta}} \qquad \forall n \in \left[0, \hat{N}-1\right] \qquad (20)$$

où l'on a noté $\rho_p$, $p = 0,...,\beta-1$ les échantillons de la séquence précédemment tronquée.

A l'étape 540, on calcule la valeur de la fonction de coût entropique $\Phi$ à partir des symboles démodulés. Cette valeur dépend des valeurs d'offsets temporel et fréquentiel, ainsi que du paramètre $\beta$, soit $\Phi(\Delta\varphi,\delta,\gamma,\beta)$. Si la fonction de coût utilisée est le kurtosis $\kappa$, on a simplement :

$$\Phi(\Delta\varphi,\delta,\beta) = \hat{\kappa}(\{\hat{a}_n\}) = \frac{\sum_{n=0}^{\hat{N}-1}|\hat{a}_n|^4}{\left(\sum_{n=0}^{\hat{N}-1}|\hat{a}_n|^2\right)^2} - 2 - \frac{\left|\sum_{n=0}^{\hat{N}-1}(\hat{a}_n)^2\right|^2}{\left(\sum_{n=0}^{\hat{N}-1}|\hat{a}_n|^2\right)^2} \qquad (21)$$

A l'étape 545, on compare la valeur $\Phi(\Delta\varphi,\delta,\gamma,\beta)$. à $\Phi_{min}$.

Si $\Phi(\Delta\varphi,\delta,\gamma,\beta) < \Phi_{min}$, la valeur minimale $\Phi_{min}$ est mise à jour en 547 grâce à $\Phi_{min} = \Phi(\Delta\varphi,\delta,\gamma,\beta)$ et l'on stocke les valeurs courantes correspondantes $\Delta\varphi,\delta,\beta$

Dans tous les cas, on passe par l'étape 550. On compare $m_1$ avec un nombre maximal prédéterminé d'itérations $M_1$. Si ce nombre maximal est atteint, on passe à l'étape 555. Dans la négative, on met à jour, en 557, les valeurs de $\Delta\varphi,\delta,\beta$ selon un algorithme de balayage. Cet algorithme peut être systématique en balayant selon un ordre préétabli des valeurs discrètes dans un volume $I_{\Delta\varphi} \times I_\delta \times I_\beta$, ou bien être adaptatif, par exemple du type à descente de gradient. Après actualisation des valeurs $\Delta\varphi,\delta,\beta$, on retourne à l'étape 525.

A l'étape 555, on mémorise les valeurs $\Delta\varphi_0,\delta_0,\beta_0$ réalisant $\Phi_{min}$. Elles correspondent à une estimation des offsets fréquentiel et temporel ainsi que de la longueur utile des symboles OFDM :

$$\widehat{\Delta f} = \frac{\Delta\varphi_0}{2\pi T_e} \; ; \quad \widehat{\Delta t} = \delta_0.T_e \; ; \quad \widehat{NT_c} = \beta_0 T_e \qquad (22)$$

On se sert ensuite de ces valeurs pour initialiser la seconde boucle d'itération. Plus précisément :

On initialise, en 557, le compteur d'itérations $m_2$ à 1, $\delta$ à la valeur $\delta_0$, ainsi que la durée du préfixe, exprimée en nombre d'échantillons, $\gamma$.

A l'étape 560, on corrige les échantillons reçus des déphasages correspondants à l'offset en fréquence $\widehat{\Delta f}$, soit $\rho_p = r_p e^{ip\Delta\varphi 0}$.

On entre dans la seconde boucle d'itération à l'étape 565. On élimine en 565, $\delta$ premiers échantillons de la séquence ainsi obtenue.

A l'étape 570, on découpe la séquence échantillonnée en blocs de taille $\gamma + \beta_0$. Soit $K$ le nombre de blocs entiers ainsi obtenus. On note alors $\rho_p^k$ , $p=0,...,\beta_0-1$ les échantillons du $k^{ième}$ bloc.

En 575, on élimine de chacun de ces $K$ blocs obtenus les $\gamma$ premiers échantillons, autrement dit ceux supposés appartenir au préfixe.

A l'étape 580, on effectue une FFT de taille $\beta_0$ des $K$ blocs ainsi obtenus, soit :

$$\hat{a}_{k,n} = \sum_{p=0}^{\beta_0-1} \rho_p^k e^{2i\pi\frac{np}{\beta_0}} \quad \forall k \in \left[0, K-1\right] \quad ; \quad \forall n \in \left[0, \hat{N}-1\right] \quad (23)$$

En 585, on calcule la valeur de la fonction de coût à partir des symboles démodulés. Cette valeur dépend du choix de la valeur d'offset temporel ainsi que du paramètre $\gamma$, soit $\Phi(\delta,\gamma)$ puisque $\widehat{\Delta f}$ et $\widehat{NT_c}$ sont respectivement fixés à $\dfrac{\Delta\varphi_0}{2\pi T_e}$ et $\beta_0 T_e$. Si la fonction de coût utilisée est le kurtosis $\kappa$:

$$\Phi(\delta,\gamma) = \hat{\kappa}\left(\{\hat{a}_{k,n}\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2} \quad (24)$$

A l'étape 587, on compare la valeur $\Phi(\delta,\gamma)$ à $\Phi_{min}$.

Si $\Phi(\delta,\gamma)<\Phi_{min}$ , la valeur minimale $\Phi_{min}$ est mise à jour en 590 par $\Phi_{min}=\Phi(\delta,\gamma)$ et les valeurs correspondantes $\delta,\gamma$ sont stockées.

A l'étape 593, on compare $m_2$ avec un nombre maximal prédéterminé d'itérations $M_2$. Si ce nombre maximal est atteint, on termine 595. Dans la négative, on passe à l'étape 597.

En 597, le compteur $m_2$ d'itérations est incrémenté, les valeurs de $\delta,\gamma$ sont actualisées selon le même principe que précédemment. Après la mise à jour des variables on retourne à l'étape 5 pour une nouvelle tentative de démodulation.

Au terme du balayage, c'est-à-dire en 593, lorsque le nombre $M_2$ d'itérations est atteint, les paramètres $\delta_1,\gamma_1$ réalisant la valeur $\Phi_{min}$ sont ensuite utilisés pour démoduler le signal OFDM. En définitive, le démodulateur utilise donc les paramètres :

$$\widehat{\Delta f} = \frac{\Delta\varphi_0}{2\pi T_e} \; ; \quad \widehat{\Delta t} = \delta_1.T_e \; ; \quad \widehat{DT_c} = \gamma_1 T_e \; ; \quad \widehat{NT_c} = \beta_0 T_e \; ; \quad (25)$$

Selon ce mode de réalisation, la première boucle permet l'estimation de la durée utile du symbole et la seconde boucle celle de la durée du préfixe. Alternativement, la première boucle peut permettre l'estimation de la durée du préfixe, et la seconde boucle celle de la durée de la partie utile.

Dans tous les cas, après la démodulation obtenue à l'aide des paramètres (25), on peut procéder à l'égalisation des symboles démodulés, de manière connue de l'homme du métier, pour estimer les symboles d'information.

## Revendications

**1.** Méthode d'estimation aveugle d'au moins un paramètre temporel de modulation d'un signal OFDM, **caractérisée**

**en ce que** l'on procède à une pluralité de tentatives de démodulation dudit signal OFDM en utilisant une pluralité de valeurs respectives de ce paramètre temporel et que, pour chaque tentative de démodulation, on calcule le kurtosis du signal démodulé, l'estimée dudit paramètre temporel étant obtenue comme la valeur de ce paramètre minimisant ledit kurtosis.

2. Méthode d'estimation selon la revendication 1, **caractérisée en ce que** le signal OFDM est démodulé en bande de base à l'aide d'une fréquence de démodulation, puis échantillonné à une fréquence supérieure à la fréquence de Nyquist pour obtenir une séquence d'échantillons.

3. Méthode d'estimation selon la revendication 2, **caractérisée en ce que**, pour chaque tentative de démodulation, lesdits échantillons sont ensuite corrigés par un facteur de déphasage, $\Delta\varphi$, correspondant à une valeur d'offset de fréquence, $\Delta f$, entre la fréquence porteuse du multiplex OFDM et la fréquence de démodulation.

4. Méthode d'estimation selon la revendication 3, **caractérisée en ce que**, pour chaque tentative de démodulation, on ampute la séquence formée par les échantillons ainsi corrigés, d'un nombre donné, $\delta$, de ses premiers échantillons, correspondant à un offset temporel.

5. Méthode d'estimation selon la revendication 4, **caractérisée en ce que**, pour chaque tentative de démodulation, on découpe la séquence ainsi amputée en blocs de taille donnée, $\gamma + \beta$, que l'on ampute chacun des blocs ainsi obtenus d'un nombre donné, $\gamma$, de ses premiers échantillons, correspondant à une durée de préfixe de symbole OFDM, et que l'on effectue une FFT de chacun des blocs ainsi amputés.

6. Méthode d'estimation selon la revendication 5, **caractérisée en ce que**, pour chaque bloc $k = 0,..., K$-1 où $K$ est le nombre total de blocs de la séquence amputée, on calcule la FFT par :

$$\hat{a}_{k,n} = \sum_{p=0}^{\beta-1} \rho_p^k e^{2i\pi \frac{np}{\beta}}$$

où $\beta$ est la taille des blocs amputés, correspondant à une durée utile de symbole OFDM, $T_e$ est la période d'échantillonnage, $\rho_p^k$ est le $(p$+1$)^{\text{ième}}$ échantillon corrigé en fréquence du $k^{\text{ième}}$ bloc et les $\hat{a}_{k,n}$, $k = 0,..., K$-1, $n = 0,...,\hat{N}$-1, où $\hat{N}$ est ladite durée utile exprimée en périodes chip, forment une séquence de symboles démodulés selon ladite tentative de démodulation.

7. Méthode d'estimation selon la revendication 6, **caractérisée en ce que** l'on calcule la valeur du kurtosis du signal démodulé à partir de ladite séquence des symboles démodulés.

8. Méthode d'estimation selon la revendication 7, **caractérisée en ce que** la valeur du kurtosis du signal démodulé est calculée par :

$$\hat{\kappa}\left(\left\{\hat{a}_{k,n}\right\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

9. Méthode d'estimation selon l'une quelconque des revendications 6 à 8, **caractérisée en ce qu'**elle procède de manière itérative, chaque itération correspondant à une tentative de démodulation à l'aide d'une dite valeur d'offset en fréquence, une dite valeur d'offset temporel, une dite durée de préfixe et une dite durée utile.

10. Méthode d'estimation selon la revendication 9, **caractérisée en ce qu'**on parcourt, au fur et à mesure des itérations, un ensemble discret de valeurs d'offset en fréquence, d'offset temporel, de durée de préfixe et de durée utile, selon un algorithme de balayage, et que l'on retient comme estimation du(des) paramètre(s) temporel(s) la durée de préfixe et/ou la durée utile réalisant le minimum du kurtosis sur ledit ensemble.

11. Méthode d'estimation selon la revendication 10, **caractérisée en ce que** ledit algorithme de balayage est de type à descente de gradient.

12. Méthode d'estimation selon la revendication 2, **caractérisée en ce que** l'on procède à une pluralité de premières tentatives de démodulation pour estimer un premier paramètre temporel, puis à une pluralité de secondes tentatives de démodulation pour estimer un second paramètre temporel, lesdites secondes tentatives de démodulation utilisant l'estimé du premier paramètre temporel pour démoduler le signal OFDM.

13. Méthode d'estimation selon la revendication 12, **caractérisée en ce que**, pour chaque première tentative de démodulation, les échantillons sont corrigés par un facteur de déphasage $\Delta\varphi$, correspondant à une valeur d'offset de fréquence $\Delta f$, entre la fréquence porteuse du multiplex OFDM et la fréquence de démodulation.

14. Méthode d'estimation selon la revendication 13, **caractérisée en ce que**, pour chaque première tentative de démodulation, on tronque la séquence ainsi amputée après un nombre donné d'échantillons, ledit nombre correspondant à une durée utile donnée de symbole OFDM, puis que l'on effectue une FFT sur les échantillons de la séquence ainsi tronquée.

15. Méthode d'estimation selon la revendication 14, **caractérisée en ce que** la FFT est calculée par :

$$\hat{a}_n = \sum_{p=0}^{\beta-1} \rho_p e^{2i\pi\frac{np}{\beta}}$$

où $\beta$ est la longueur de la séquence tronquée, $T_e$ est la période d'échantillonnage, $\rho_p$ est le $(p+1)^{i\grave{e}me}$ échantillon corrigé en fréquence de la séquence tronquée, les $\hat{a}_n$, $n=0,...,\hat{N}$-1, où $\hat{N}$ est ladite durée utile exprimée en périodes chip, formant une séquence de symboles démodulés selon ladite première tentative de démodulation.

16. Méthode d'estimation selon la revendication 15, **caractérisée en ce que** l'on calcule une première valeur , $\Phi(\Delta\varphi, \delta,\beta)$, du kurtosis à partir de ladite séquence des symboles démodulés.

17. Méthode d'estimation selon la revendication 16, **caractérisée en ce que** la valeur du kurtosis est calculée par :

$$\hat{\kappa}\left(\{\hat{a}_n\}\right) = \frac{\sum_{n=0}^{\hat{N}-1}|\hat{a}_n|^4}{\left(\sum_{n=0}^{\hat{N}-1}|\hat{a}_n|^2\right)^2} - 2 - \frac{\left|\sum_{n=0}^{\hat{N}-1}(\hat{a}_n)^2\right|^2}{\left(\sum_{n=0}^{\hat{N}-1}|\hat{a}_n|^2\right)^2}$$

18. Méthode d'estimation selon les revendications 15 à 17, **caractérisée en ce qu'**elle procède de manière itérative, chaque itération correspondant à une première tentative de démodulation à l'aide d'une dite valeur d'offset en fréquence, une dite valeur d'offset temporel, une dite durée de préfixe et une dite durée utile.

**EP 2 034 685 B1**

**19.** Méthode d'estimation selon la revendication 18, **caractérisée en ce qu'**on parcourt, au fur et à mesure des itérations, un ensemble discret de valeurs d'offset en fréquence, d'offset temporel, de durée de préfixe et de durée utile, selon un algorithme de balayage, et que l'on mémorise les valeurs d'offset de fréquence, d'offset temporel et de durée utile réalisant le minimum du kurtosis sur ledit ensemble, l'estimation du premier paramètre temporel étant la durée utile ainsi mémorisée.

**20.** Méthode d'estimation selon la revendication 19, **caractérisée en ce que**, chaque échantillon de ladite séquence d'échantillons est corrigé par un facteur de déphasage , $\Delta\varphi_0$, correspondant à la valeur d'offset de fréquence , $\Delta f$, ainsi mémorisée.

**21.** Méthode d'estimation selon la revendication 20, **caractérisée en ce que**, pour chaque seconde tentative de démodulation, on ampute la séquence formée par les échantillons ainsi corrigés, d'un nombre donné de ses premiers échantillons, correspondant à un offset temporel, on découpe ensuite la séquence amputée en blocs de taille donnée , $\gamma + \beta_0$, et l'on supprime de chacun desdits blocs un nombre donné de ses premiers échantillons, correspondant à une durée de préfixe de symbole OFDM.

**22.** Méthode d'estimation selon la revendication 21, **caractérisée en ce que**, pour chaque bloc $k=0,...,K$-1 où $K$ est le nombre total de blocs obtenus, on calcule une FFT par :

$$\hat{a}_{k,n} = \sum_{p=0}^{\beta_0-1} \rho_p^k e^{2i\pi\frac{np}{\beta_0}}$$

où $\beta_0$ est la valeur de durée utile mémorisée, exprimée en nombre d'échantillons, $T_e$ est la période d'échantillonnage,

$\rho_p^k$ est le $(p+1)^{ième}$ échantillon corrigé en fréquence du $k^{ième}$ bloc et les $\hat{a}_{k,n}$, $k=0,...,K$-1, $n=0,...,\hat{N}$-1, forment une séquence de symboles démodulés selon ladite seconde tentative de démodulation.

**23.** Méthode d'estimation selon la revendication 22, **caractérisée en ce que** l'on calcule une seconde valeur , $\Phi(\delta,\gamma)$, du kurtosis à partir de ladite séquence des symboles démodulés.

**24.** Méthode d'estimation selon la revendication 23, **caractérisée en ce que** la valeur du kurtosis est calculée par :

$$\Phi\left(\delta,\gamma\right) = \hat{\kappa}\left(\left\{\hat{a}_{k,n}\right\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

**25.** Méthode d'estimation selon la revendication 24, **caractérisée en ce qu'**elle procède de manière itérative, chaque itération correspondant à une seconde tentative de démodulation à l'aide des valeurs d'offset en fréquence et de durée utile mémorisées, d'une dite valeur d'offset temporel et une dite durée de préfixe.

**26.** Méthode d'estimation selon la revendication 25, **caractérisée en ce que** l'on parcourt, au fur et à mesure des itérations, un ensemble discret d'offset temporel et de durée de préfixe, selon un algorithme de balayage, et que l'on mémorise les valeurs d'offset temporel et de durée de préfixe réalisant le minimum du kurtosis sur ledit ensemble, l'estimation du second paramètre temporel étant la durée de préfixe ainsi mémorisée.

**27.** Méthode d'estimation selon la revendication 19 ou 26, **caractérisée en ce que** l'algorithme de balayage est de type à descente de gradient.

**Claims**

1. Blind estimation method of at least one temporal modulation parameter of an OFDM signal, **characterised in that** a plurality of demodulation attempts of said OFDM signal are carried out using a plurality of respective values of this temporal parameter and that, for each demodulation attempt, the kurtosis of the demodulated signal is calculated, the estimate of said temporal parameter being obtained as the value of this parameter minimising said kurtosis.

2. Estimation method according to claim 1, **characterised in that** the OFDM signal is demodulated in base band by means of a demodulation frequency, then sampled at a frequency greater than the Nyquist frequency to obtain a sequence of samples.

3. Estimation method according to claim 2, **characterised in that**, for each demodulation attempt, said samples are then corrected by a phase offset, $\Delta\varphi$, corresponding to a frequency offset value, $\Delta f$, between the carrier frequency of the OFDM multiplex and the demodulation frequency.

4. Estimation method according to claim 3, **characterised in that**, for each demodulation attempt, the sequence formed by the samples thereby corrected is stripped of a given number, $\delta$, of its first samples, corresponding to a temporal offset.

5. Estimation method according to claim 4, **characterised in that**, for each demodulation attempt, the sequence thus stripped is cut up into blocks of given size, $\gamma + \beta$, that each of the blocks thereby obtained is stripped of a given number, $\gamma$, of its first samples, corresponding to an OFDM symbol prefix time, and that a FFT of each of the blocks thus stripped is performed.

6. Estimation method according to claim 5, **characterised in that**, for each block $k=0,...,K$-1 where $K$ is the total number of blocks of the stripped sequence, the FFT is calculated by:

$$\hat{a}_{k,n} = \sum_{p=0}^{\beta-1} \rho_p^k e^{2i\pi\frac{np}{\beta}}$$

where $\beta$ is the size of the stripped blocks, corresponding to an OFDM symbol useful time, $T_e$ is the sampling period,

$\rho_p^k$ is the $(p+1)^{th}$ frequency corrected sample of the $k^{th}$ block and the $\hat{a}_{k,n}$, $k=0,...,K$-1, $n=0,...,\hat{N}$-1, where $\hat{N}$ is said useful time expressed in chip periods, form a sequence of demodulated symbols according to said demodulation attempt.

7. Estimation method according to claim 6, **characterised in that** the value of said kurtosis is calculated from said sequence of demodulated symbols.

8. Estimation method according to claim 7, **characterised in that** the value of the kurtosis of the demodulation signal is calculated by:

$$\hat{\kappa}\left(\left\{\hat{a}_{k,n}\right\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

9. Estimation method according to any of claims 6 to 8, **characterised in that** it is carried out in an iterative manner, each iteration corresponding to a demodulation attempt by means of a said frequency offset value, a said temporal offset value, a said prefix time and a said useful time.

10. Estimation method according to claim 9, **characterised in that** as the iterations proceed, a discrete series of frequency offset, temporal offset, prefix time and useful time values are run through, according to a scanning algorithm, and that as estimate(s) of the temporal parameter(s), the prefix time and/or the useful time achieving the minimum of the kurtosis on said series is(are) retained.

11. Estimation method according to claim 10, **characterised in that** said scanning algorithm is of gradient descent type.

12. Estimation method according to claim 2, **characterised in that** one carries out a plurality of first demodulation attempts to estimate a first time parameter, then a plurality of second demodulation attempts to estimate a second time parameter, said second demodulation attempts using the estimate of the first time parameter to demodulate the OFDM signal.

13. Estimation method according to claim 12, **characterised in that**, for each first demodulation attempt, the samples are corrected by a phase offset, $\Delta\varphi$, corresponding to a frequency offset value, $\Delta f$, between the carrier frequency of the OFDM multiplex and the demodulation frequency.

14. Estimation method according to claim 13, **characterised in that**, for each first demodulation attempt, the sequence thus stripped is truncated after a given number of samples, said number corresponding to one given OFDM symbol useful time, then a FFT is performed on the samples of the sequence thereby truncated.

15. Estimation method according to claim 14, **characterised in that** the FFT is calculated by:

$$\hat{a}_n = \sum_{p=0}^{\beta-1} \rho_p e^{2i\pi\frac{np}{\beta}}$$

where $\beta$ is the length of the truncated sequence, $T_e$ is the sampling period, $\rho_p$ is the $(p+1)^{th}$ frequency corrected sample of the truncated sequence, the $\hat{a}_n$, $n=0,...,\hat{N}$-1, where $\hat{N}$ is said useful time expressed in chip periods, forming a sequence of demodulated symbols according to said first demodulation attempt.

16. Estimation method according to claim 15, **characterised in that** a first value, $\Phi(\Delta\varphi,\delta,\beta)$, of said cost function is calculated from said sequence of demodulated symbols.

17. Estimation method according to claim 16, **characterised in that** the value of the kurtosis is calculated by:

$$\hat{\kappa}\left(\left\{\hat{a}_n\right\}\right) = \frac{\displaystyle\sum_{n=0}^{\hat{N}-1}\left|\hat{a}_n\right|^4}{\left(\displaystyle\sum_{n=0}^{\hat{N}-1}\left|\hat{a}_n\right|^2\right)^2} - 2 - \frac{\left|\displaystyle\sum_{n=0}^{\hat{N}-1}\left(\hat{a}_n\right)^2\right|^2}{\left(\displaystyle\sum_{n=0}^{\hat{N}-1}\left|\hat{a}_n\right|^2\right)^2}$$

18. Estimation method according to claims 15 to 17, **characterised in that** it is carried out in an iterative manner, each iteration corresponding to a first demodulation attempt by means of a said frequency offset value, a said temporal offset value, a said prefix time and a said useful time.

19. Estimation method according to claim 18, **characterised in that**, as the iterations proceed, a discrete series of frequency offset, temporal offset, prefix time and useful time values are run through, according to a scanning algorithm, and that the frequency offset, temporal offset and useful time values achieving the minimum of the kurtosis on said series is memorised, the estimation of the first time parameter being the useful time thereby memorised.

20. Estimation method according to claim 19, **characterised in that**, each sample of said sequence of samples is corrected by a phase offset, $\Delta\varphi_0$, corresponding to the frequency offset value, $\Delta f$, thereby memorised.

21. Estimation method according to claim 20, **characterised in that**, for each second demodulation attempt, the sequence formed by the samples thereby corrected is stripped of a given number of its first samples, corresponding to a temporal offset, the stripped sequence is cut up into blocks of given size, $\gamma + \beta_0$, and from each of said blocks a given number of its first samples are removed, corresponding to an OFDM symbol prefix time.

22. Estimation method according to claim 21, **characterised in that**, for each block $k = 0,..., K\text{-}1$ where $K$ is the total number of blocks obtained, a FFT is calculated by:

$$\hat{a}_{k,n} = \sum_{p=0}^{\beta_0-1} \rho_p^k e^{2i\pi\frac{np}{\beta_0}}$$

where $\beta_0$ is the value of useful time memorised, expressed in number of samples, $T_e$ is the sampling period, $\rho_p^k$ is the $(p+1)^{th}$ frequency corrected sample of *the $k^{th}$* block and the $\hat{a}_{k,n}$, $k = 0,...,K\text{-}1$, $n = 0,...,\hat{N}\text{-}1$, form a sequence of demodulated symbols according to said second demodulation attempt.

23. Estimation method according to claim 22, **characterised in that** a second value, $\Phi(\delta,\gamma)$, of said kurtosis is calculated from said sequence of demodulated symbols.

24. Estimation method according to claim 23, **characterised in that** the value of said kurtosis is calculated by:

$$\Phi(\delta,\gamma) = \hat{\kappa}\left(\{\hat{a}_{k,n}\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

**25.** Estimation method according to claim 24, **characterised in that** it is carried out in an iterative manner, each iteration corresponding to a second demodulation attempt by means of the memorised frequency offset and useful time values, a said temporal offset value and a said prefix time.

**26.** Estimation method according to claim 25, **characterised in that**, as the iterations proceed, a series of temporal offset and prefix time values is run through, according to a scanning algorithm, and that the temporal offset and prefix time values achieving the minimum of the cost function on said series is memorised, the estimation of the second time parameter being the prefix time thereby memorised.

**27.** Estimation method according to claim 19 or 26, **characterised in that** the scanning algorithm is of gradient descent type.

**Patentansprüche**

**1.** Verfahren zur Blindabschätzung wenigstens eines zeitlichen Modulationsparameters eines OFDM-Signals, **dadurch gekennzeichnet, dass** man eine Mehrzahl von Versuchen zur Demodulation des OFDM-Signals unter Verwendung einer Mehrzahl von jeweiligen Werten diesen zeitlichen Parameters durchführt, und dass man für jeden Demodulationsversuch die Kurtosis des demodulierten Signals berechnet, wobei die Abschätzung des zeitlichen Parameters als derjenige Wert dieses Parameters erhalten wird, der die Kurtosis minimiert.

**2.** Verfahren zur Abschätzung nach Anspruch 1, **dadurch gekennzeichnet, dass** das OFDM-Signal im Basisband mittels einer Demodulationsfrequenz demoduliert und dann mit einer Frequenz abgetastet wird, die größer als die Nyquist-Frequenz ist, um eine Folge von Abtastwerten zu erhalten.

**3.** Verfahren zur Abschätzung nach Anspruch 2, **dadurch gekennzeichnet, dass** für jeden Demodulationsversuch die Abtastwerte anschließend um einen Phasenverschiebungsfaktor $\Delta\varphi$ korrigiert werden, der einem Wert des Frequenzoffsets $\Delta f$ zwischen der Trägerfrequenz des OFDM-Multiplex und der Demodulationsfrequenz entspricht.

**4.** Verfahren zur Abschätzung nach Anspruch 3, **dadurch gekennzeichnet, dass** man für jeden Demodulationsversuch die Folge, die durch die derart korrigierten Abtastwerte gebildet wird, um eine gegebene Zahl $\delta$ ihrer ersten Abtastwerte entsprechend einem zeitlichen Offset kürzt.

**5.** Verfahren zur Abschätzung nach Anspruch 4, **dadurch gekennzeichnet, dass** man für jeden Demodulationsversuch die derart gekürzte Folge in Blöcke vorgegebener Größe $\gamma + \beta$ schneidet, dass man jeden der derart erhaltenen Blöcke um eine gegebene Zahl $\gamma$ seiner ersten Abtastwerte entsprechend einer Präfixdauer des OFDM-Symbols kürzt, und dass man eine FFT jedes der derart gekürzten Blöcke durchführt.

**6.** Verfahren zur Abschätzung nach Anspruch 5, **dadurch gekennzeichnet, dass** man für jeden Block k=0,...K-1, wobei K die Gesamtzahl von Blöcken der gekürzten Folge ist, die FFT berechnet durch:

$$\hat{a}_{k,n} = \sum_{p=0}^{\beta-1} \rho_p^k e^{2i\pi\frac{np}{\beta}}$$

wobei β die Größe der gekürzten Blöcke entsprechend einer Nutzdauer des OFDM-Symbols ist, $T_e$ die Abtastperiode ist, $\rho_p^k$ der (p+1)-te frequenzkorrigierte Abtastwert des k-ten Blocks ist, und die $\hat{a}_{k,n}$, k=0,...K-1, n=0, ...,$\hat{N}$-1, wobei $\hat{N}$ die Nutzdauer ausgedrückt in Chipperioden ist, eine Folge von Symbolen bilden, die gemäß dem Demodulationsversuch demoduliert sind.

**7.** Verfahren zur Abschätzung nach Anspruch 6, **dadurch gekennzeichnet, dass** man den Kurtosis-Wert des demodulierten Signals ausgehend von der Folge von demodulierten Symbolen berechnet.

**8.** Verfahren zur Abschätzung nach Anspruch 7, **dadurch gekennzeichnet, dass** der Kurtosis-Wert des demodulierten Signals berechnet wird durch:

$$\hat{\kappa}\left(\left\{\hat{a}_{k,n}\right\}\right) = \frac{\sum_{k=0}^{K-1}\sum_{n=0}^{\hat{N}-1}\left|\hat{a}_{k,n}\right|^4}{\left(\sum_{k=0}^{K-1}\sum_{n=0}^{\hat{N}-1}\left|\hat{a}_{k,n}\right|^2\right)^2} - 2 - \frac{\left|\sum_{k=0}^{K-1}\sum_{n=0}^{\hat{N}-1}\left(\hat{a}_{k,n}\right)^2\right|^2}{\left(\sum_{k=0}^{K-1}\sum_{n=0}^{\hat{N}-1}\left|\hat{a}_{k,n}\right|^2\right)^2}$$

**9.** Verfahren zur Abschätzung nach einem der Ansprüche 6 bis 8, **dadurch gekennzeichnet, dass** es auf iterative Weise durchgeführt wird, wobei jede Iteration einem Demodulationsversuch mittels eines Frequenzoffsetwerts, eines zeitlichen Offsetwerts, einer Präfixdauer und einer Nutzdauer entspricht.

**10.** Verfahren zur Abschätzung nach Anspruch 9, **dadurch gekennzeichnet, dass** man im Verlauf der Iterationen nach und nach eine diskrete Gesamtheit von Werten des Frequenzoffsets, des zeitlichen Offsets, der Präfixdauer und der Nutzdauer gemäß einem Ablenkungsalgorithmus durchläuft, und dass man als Abschätzung des/der zeitlichen Parameter(s) die Präfixdauer und/oder die Nutzdauer beibehält, die auf der Gesamtheit das Minimum der Kurtosis realisieren.

**11.** Verfahren zur Abschätzung nach Anspruch 10, **dadurch gekennzeichnet, dass** der Ablenkungsalgorithmus vom Typ mit abnehmendem Gradienten ist.

**12.** Verfahren zur Abschätzung nach Anspruch 2, **dadurch gekennzeichnet, dass** man eine Mehrzahl von ersten Demodulationsversuchen vornimmt, um einen ersten zeitlichen Parameter abzuschätzen, dann eine Mehrzahl von zweiten Demodulationsversuchen, um einen zweiten zeitlichen Parameter abzuschätzen, wobei die zweiten Demodulationsversuche die Abschätzung des ersten zeitlichen Parameters verwenden, um das OFDM-Signal zu demodulieren.

**13.** Verfahren zur Abschätzung nach Anspruch 12, **dadurch gekennzeichnet, dass** für jeden ersten Demodulationsversuch die Abtastwerte um einen Phasenverschiebungsfaktor Δφ korrigiert werden, der einem Frequenzoffsetwert Δf zwischen der Trägerfrequenz des OFDM-Multiplex und der Demodulationsfrequenz entspricht.

**14.** Verfahren zur Abschätzung nach Anspruch 13, **dadurch gekennzeichnet, dass** man für jeden ersten Demodulationsversuch die derart gekürzte Folge nach einer vorgegebenen Zahl von Abtastwerten verstümmelt, wobei die Zahl einer gegebenen Nutzdauer des OFDM-Symbols entspricht, und dass man dann auf den Abtastwerten der derart verstümmelten Folge eine FFT durchführt.

**15.** Verfahren zur Abschätzung nach Anspruch 14, **dadurch gekennzeichnet, dass** die FFT berechnet wird durch:

$$\hat{a}_n = \sum_{p=0}^{\beta-1} \rho_p e^{2i\pi\frac{np}{\beta}}$$

wobei $\beta$ die Länge der verstümmelten Folge ist, $T_e$ die Abtastperiode ist, $\rho_p$ der (p+1)-te frequenzkorrigierte Abtastwert der verstümmelten Folge ist, und die $\hat{a}_n$, n=0,...,$\hat{N}$-1, wobei $\hat{N}$ die Nutzdauer ausgedrückt in Chipperioden ist, eine Folge von Symbolen bilden, die gemäß dem ersten Demodulationsversuch demoduliert sind.

**16.** Verfahren zur Abschätzung nach Anspruch 15, **dadurch gekennzeichnet, dass** man einen ersten Wert $\Phi(\Delta\phi,\delta,\beta)$ der Kurtosis ausgehend von der Sequenz demodulierter Symbole berechnet.

**17.** Verfahren zur Abschätzung nach Anspruch 16, **dadurch gekennzeichnet, dass** der Kurtosis-Wert berechnet wird durch:

$$\hat{\kappa}\left(\{\hat{a}_n\}\right) = \frac{\sum_{n=0}^{\hat{N}-1} |\hat{a}_n|^4}{\left(\sum_{n=0}^{\hat{N}-1} |\hat{a}_n|^2\right)^2} - 2 - \frac{\left|\sum_{n=0}^{\hat{N}-1} (\hat{a}_n)^2\right|^2}{\left(\sum_{n=0}^{\hat{N}-1} |\hat{a}_n|^2\right)^2}$$

**18.** Verfahren zur Abschätzung nach den Ansprüchen 15 bis 17, **dadurch gekennzeichnet, dass** es auf iterative Weise durchgeführt wird, wobei jede Iteration einem ersten Demodulationsversuch mittels eines Werts des Frequenzoffsets, eines Werts des zeitlichen Offsets, einer Präfixdauer und einer Nutzdauer entspricht.

**19.** Verfahren zur Abschätzung nach Anspruch 18, **dadurch gekennzeichnet, dass** man im Verlauf der Iterationen nach und nach eine diskrete Gesamtheit von Werten des Frequenzoffsets, des Zeitoffsets, von Präfixdauern und von Nutzdauern gemäß einem Ablenkungsalgorithmus durchläuft, und dass man die Werte des Frequenzoffsets, des zeitlichen Offsets und der Nutzdauer, die auf der Gesamtheit das Minimum der Kurtosis realisieren, speichert, wobei die Abschätzung des ersten zeitlichen Parameters die derart gespeicherte Nutzdauer ist.

**20.** Verfahren zur Abschätzung nach Anspruch 19, **dadurch gekennzeichnet, dass** jeder Abtastwert der Folge von Abtastwerten um einen Phasenverschiebungsfaktor $\Delta\phi_0$ korrigiert wird, der dem derart gespeicherten Wert des Frequenzoffsets $\Delta f$ entspricht.

**21.** Verfahren zur Abschätzung nach Anspruch 20, **dadurch gekennzeichnet, dass** man für jeden zweiten Demodulationsversuch die Folge, die durch die derart korrigierten Abtastwerte gebildet wird, um eine gegebene Zahl ihrer ersten Abtastwerte kürzt, die einem zeitlichen Offset entspricht, dass man dann die gekürzte Folge in Blöcke gegebener Größe $\gamma + \beta_0$ schneidet, und dass man bei jedem dieser Blöcke eine gegebene Zahl seiner ersten Abtastwerte unterdrückt, die einer Präfixdauer des OFDM-Symbols entspricht.

**22.** Verfahren zur Abschätzung nach Anspruch 21, **dadurch gekennzeichnet, dass** man für jeden Block k=0,..., K-1, wobei K die Gesamtzahl von erhaltenen Blöcken ist, eine FFT berechnet durch:

$$\hat{a}_{k,n} = \sum_{p=0}^{\beta_0-1} \rho_p^k e^{2i\pi\frac{np}{\beta_0}}$$

wobei $\beta_0$ der Wert der gespeicherten Nutzdauer ist, ausgedrückt als Zahl von Abtastwerten, $T_e$ die Abtastperiode ist, $\rho_p^k$ der (p+1)-te frequenzkorrigierte Abtastwert des k-ten Blocks ist, und die $\hat{a}_{k,n}$, k=0,...,K-1, n=0,...,$\hat{N}$-1 eine Folge von Symbolen bilden, die gemäß dem zweiten Demodulationsversuch demoduliert sind.

23. Verfahren zur Abschätzung nach Anspruch 22, **dadurch gekennzeichnet, dass** man einen zweiten Wert $\Phi(\delta,\gamma)$ der Kurtosis ausgehend von der Folge der demodulierten Symbole berechnet.

24. Verfahren zur Abschätzung nach Anspruch 23, **dadurch gekennzeichnet, dass** der Kurtosis-Wert berechnet wird durch:

$$\Phi(\delta,\gamma) = \hat{\kappa}\left(\left\{\hat{a}_{k,n}\right\}\right) = \frac{\displaystyle\sum_{k=0}^{K-1}\sum_{n=0}^{\hat{N}-1}\left|\hat{a}_{k,n}\right|^4}{\left(\displaystyle\sum_{k=0}^{K-1}\sum_{n=0}^{\hat{N}-1}\left|\hat{a}_{k,n}\right|^2\right)^2} - 2 - \frac{\left|\displaystyle\sum_{k=0}^{K-1}\sum_{n=0}^{\hat{N}-1}\left(\hat{a}_{k,n}\right)^2\right|^2}{\left(\displaystyle\sum_{k=0}^{K-1}\sum_{n=0}^{\hat{N}-1}\left|\hat{a}_{k,n}\right|^2\right)^2}$$

25. Verfahren zur Abschätzung nach Anspruch 24, **dadurch gekennzeichnet, dass** es iterativ durchgeführt wird, wobei jede Iteration einem zweiten Demodulationsversuch mittels der gespeicherten Werte des Frequenzoffsets und der Nutzdauer entspricht, eines Zeitoffsetwerts und einer Präfixdauer.

26. Verfahren zur Abschätzung nach Anspruch 25, **dadurch gekennzeichnet, dass** man im Verlauf der Iterationen nach und nach eine diskrete Gesamtheit von Zeitoffsets und von Präfixdauern gemäß einem Ablenkalgorithmus durchläuft, und dass man die Werte des Zeitoffsets und der Präfixdauer speichert, die auf der Gesamtheit das Minimum der Kurtosis realisieren, wobei die Abschätzung des zweiten zeitlichen Parameters die derart gespeicherte Präfixdauer ist.

27. Verfahren zur Abschätzung nach Anspruch 19 oder 26, **dadurch gekennzeichnet, dass** der Ablenkalgorithmus vom Typ mit abnehmenden Gradienten ist.

$T_{prefix} = DT_c$

$T_{utile} = NT_c$

**Fig. 1**

**Fig. 2**

**Fig. 3A**

**Fig. 3B**

$$T_e \downarrow$$ 410

$$m = 1 \qquad \Phi_{min} \qquad \Delta\varphi = \Delta f.2\pi T_c \qquad \Delta t = \delta.T_c$$
$$\widehat{DT_c} = \gamma T_c \qquad\qquad \widehat{NT_c} = \beta T_c$$ 420

$$\rho_p = r_p e^{ip\Delta\varphi}$$ 425

*eliminate $\delta$ samples* 430

$$slice(\gamma + \beta) \Rightarrow K \text{ blocks}$$ 435

*for block $k = 0,..,K-1$*
*eliminate $\gamma$ samples* 440

$$\hat{a}_{k,n} = \sum_{p=0}^{\beta-1} \rho_p^k e^{2i\pi\frac{np}{\beta}}$$ 445

$$\Phi(\Delta\varphi, \delta, \gamma, \beta)$$ 450

455

457

$$\Phi(\Delta\varphi, \delta, \gamma, \beta) < \Phi_{min} ?$$ 

$$\Phi_{min} = \Phi(\Delta\varphi, \delta, \gamma, \beta)$$
$$store(\Delta\varphi, \delta, \gamma, \beta)$$

Y

N

460

$$m = M ?$$

*end* 465

Y

N

$$m = m+1$$
$$update(\Delta\varphi, \delta, \gamma, \beta)$$ 470

**Fig. 4**

$T_e \downarrow$     510

$m = 1$    $\Phi_{min}$    $\Delta\varphi = \Delta f.2\pi T_e$    $\Delta t = \delta.T_e$

$\widehat{NT_e} = \beta T_e$     520

$\rho_p = r_p e^{ip\Delta\varphi}$     525

*eliminate $\delta$ samples*     530

*truncate after $\beta$ samples*     535

$\hat{a}_n = \sum_{p=0}^{\beta-1} \rho_p e^{2i\pi\frac{np}{\beta}}$     540

$\Phi(\Delta\varphi, \delta, \beta)$     543

545

547

$\Phi(\Delta\varphi, \delta, \beta) < \Phi_{min}$ ?     **Y**    $\Phi_{min} = \Phi(\Delta\varphi, \delta, \beta)$   $store(\Delta\varphi, \delta, \beta)$

**N**

557

$m = m+1$   $update(\Delta\varphi, \delta, \beta)$    **N**    $m = M_1$ ?     550

**Y**

$store(\Delta\varphi_0, \delta_0, \beta_0)$     555

**Fig. 5A**

$m = 1 \qquad \Phi_{min} \qquad \delta = \delta_0 \qquad \beta = \beta_0$

$\widehat{DT_c} = \gamma T_c$ — 557

$\rho_p = r_p e^{jp\Delta\varphi_0}$ — 560

eliminate $\delta$ samples — 565

slice$(\gamma + \beta_0) \Rightarrow K$ blocks — 570

for block $k = 0,..,K-1$
eliminate $\gamma$ samples — 575

$\hat{a}_{k,n} = \sum_{p=0}^{\beta_0 - 1} \rho_p^k e^{2j\pi \frac{np}{\beta_0}}$ — 580

$\Phi(\delta, \gamma)$ — 585

590

587

$\Phi(\delta, \gamma) < \Phi_{min}$? $\xrightarrow{\text{Y}}$ $\Phi_{min} = \Phi(\delta, \gamma)$
store$(\delta, \gamma)$

N

597

$m = m + 1$
update$(\delta, \gamma)$ $\xleftarrow{\text{N}}$ $m_2 = M_2$? — 593

Y

end — 595

**Fig. 5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. LIU et al.** A blind time-parameters estimation scheme for OFDM in multi-path channel. *Proc. 2005 Int'1 Conference on Information, Communications and Signal Processing,* 23 Septembre 2005, vol. 1, 242-247

- **W. AKMOUCHE et al.** OFDM parameters estimation a time approach. *Proc. Asilomar Conference on Signals, Systems and Computers,* 29 Octobre 2000, 142-146
- **Y. YAO ; B. GRIANNAKIS.** Blind carrier frequency offset estimation for OFDMA-based wireless networks. *Proc. IEEE Military communications conference,* 31 Octobre 2004, 1233-1239